# EUROPÄISCHE PATENTSCHRIFT

(11) **EP 1 430 635 B1**
(45) Veröffentlichungstag und Bekanntmachung des Hinweises auf die Patenterteilung: **29.11.2006**
(21) Anmeldenummer: 02776707.8
(22) Anmeldetag: 23.09.2002
(51) Int. Cl.: H04L 1/18

(54) **VERFAHREN UND FUNKSTATION ZUR DATENÜBERTRAGUNG IN EINEM FUNK-KOMMUNIKATIONSSYSTEM**
METHOD AND RADIO STATION FOR DATA TRANSMISSION IN A RADIO COMMUNICATION SYSTEM
PROCEDE ET STATION RADIO POUR TRANSMETTRE DES DONNEES DANS UN SYSTEME DE RADIOCOMMUNICATION

(30) Priorität: 26.09.2001 DE 10147487
(43) Veröffentlichungstag der Anmeldung: 23.06.2004
(73) Patentinhaber: SIEMENS AKTIENGESELLSCHAFT, 80333 München (DE)
(72) Erfinder: LOTT, Matthias, 81477 München (DE); SCHULZ, Egon, 80993 München (DE); COSTA, Elena, 85748 Garching (DE)
(86) Internationale Anmeldenummer: PCT/DE2002/003590
(87) Internationale Veröffentlichungsnummer: WO 2003/028280

(56) Entgegenhaltungen:
- WO-A-01/37480
- US-B1- 6 278 716
- SHIOZAKI A: "ADAPTIVE TYPE-II HYBRID BROADCAST ARQ SYSTEM" IEEE TRANSACTIONS ON COMMUNICATIONS, IEEE INC. NEW YORK, US, Bd. 44, Nr. 4, 1. April 1996 (1996-04-01), Seiten 420-422, XP000587074 ISSN: 0090-6778

## Beschreibung

Die Erfindung betrifft ein Verfahren und eine Funkstation zur Datenübertragung in einem Funk-Kommunikationssystem, insbesondere in einem Mobilfunksystem.

Funk-Kommunikationssysteme sind in Form von Mobilfunksystemen und drahtlosen Teilnehmerzugangsnetzen, auch Wireless Local Area Network (WLAN) genannt, bekannt. Mobilfunksysteme nach dem Stand der Technik sind beispielsweise das weltweit verbreitete GSM-System (Global System for Mobile Communications) der zweiten Generation sowie das zukünftige UMTS-System (Universal Mobile Telecommunications System) der dritten Generation. Diese Systeme arbeiten in Frequenzbändern um ca. 1 und 2. GHz und verwenden ein TDMA- (Time Division Multiple Access) bzw. CDMA- (Code Division Multiple Access) Teilnehmerseparierungsverfahren. Zukünftige WLAN-Systeme sind beispielsweise das von der ETSI (European Telecommunications Standards Institute) standardisierte Hiperlän/2 und das von der IEEE standardisierte IEEE 802.11. Beide Systeme nutzen ein OFDM (Orthogonal Frequency Division Multiplex) Übertragungsverfahren mit 64 Unterträgern im 5 GHz Frequenzband. Diese beiden WLAN-Systeme sind unter anderem aus dem Buch von B. Walke "Mobilfunknetze und ihre Protokolle", B.G. Teubner Stuttgart, 2000, Band 2, Seiten 370-432, bekannt.

Beide WLAN-Systeme basieren auf einer einfachen Netzstruktur, nach der so genannte Zugangspunkte, engl. Access Points (AP), einen funkbasierten Hochgeschwindigkeitszugang mit einer typischen Datenrate von 27 Mbit/s zu verschiedenen Netzen, wie beispielsweise UMTS-Kernnetze, ATM-Netze und IP-basierte Netze zur Verfügung stellen. Dabei wird auch eine mögliche Mobilität der Teilnehmerstationen, engl. Mobile Terminals (MT), ermöglicht, in dem Handover-Verfahren, d.h. eine Verbindungsübergabe von einem Zugangspunkt zu einem nächsten, unterstützt werden.

Ein grundlegendes Problem in derartigen Funksystemen tritt bei der Übertragung von so genannten Verteildiensten, engl. Broadcast oder Multicast, auf, da Daten aufgrund der varianten Eigenschaften der Funkkanäle häufig verfälscht werden.

Nach dem Stand der Technik werden in Funk-Kommunikationssystemen für so genannte Unicast-Verbindungen, d.h. Punkt-zu-Punkt-Verbindungen zwischen zwei Funkstationen, meistens Kombinationen aus einer Vorwärts-Fehlerkorrektur (FEC Forward Error Correction) und ARQ-Verfahren (Automatic Repeat Request) eingesetzt, um eine geforderte Dienstequalität (QoS Quality of Service) bzw. Restfehlerwahrscheinlichkeit bei der Übertragung zu gewährleisten. Versagen FEC-Verfahren bei schlechten Funkkanalverhältnissen, wie beispielsweise Schwund, oder bei starken Interferenzstörungen, so können durch eine wiederholte Übertragung gemäß dem ARQ-Verfahren die beim Empfänger fehlerhaft oder nicht empfangenen Daten mit hoher Wahrscheinlichkeit wiederhergestellt werden.

Bei dem ARQ-Verfahren werden korrekt empfangene Datenpakete durch positive Quittungen (ACK Acknowledgement) bestätigt, und fehlerhaft empfangene Datenpakete durch eine negativen Quittung (NAK Negative Acknowledgement) in einer Signalisierungsdateneinheit (S-PDU Signalling Packet Data Unit) zur nochmaligen Übertragung von dem Empfänger angefordert.

Für die sichere Datenübertragung bei Verteildiensten oder auch allgemeinen Signalisierungen werden nach dem Stand der Technik ausschließlich FEC-Verfahren eingesetzt. ARQ-Verfahren werden dahingehend nicht verwendet, da die hierfür benötigte Übertragungskapazitäten auf den Rückkanälen zu groß wäre, und mit Zunahme der Teilnehmer die Wahrscheinlichkeit einer fehlerbehafteten Datenübertragung ohnehin zunähme. Ergänzend zu einem starken FEC-Verfahren wird beispielsweise bei dem beschriebenen Hiperlan/2-System ein so genannter Wiederhol-Modus, engl. Repitition Mode, eingesetzt, bei dem die gleichen Daten mehrmals aufeinanderfolgend übertragen werden, ohne das eine Bestätigung des Empfangs seitens der empfangenden Funkstationen übertragen wird. Aber auch ein derartiges mehrmaliges Übertragen von Datenpaketen stellt noch keinen fehlerfreien Empfang sicher.

Aus der WO 01/37480 A2 ist ein System bekannt, bei dem eine erste Station eine Anzahl von Datenpaketen im Sinne eines Multicast zu einer Anzahl zweiter Stationen sendet. Um die Anzahl der von den zweiten Stationen gesendeten Rückmeldeinformationen zu begrenzen, sendet die erste Station regelmäßig Rückmeldeanforderungen zu den zweiten Stationen, in denen ein Wahrscheinlichkeitswert sowie ein Schwellwert für einen schlechtesten Empfang angegeben sind. In Abhängigkeit von diesen Werten senden die zweiten Stationen entsprechend Rückmeldeinformationen zu der ersten Station, die daraufhin Korrekturinformationen aussendet.

Aufgabe der Erfindung ist es daher, ein Verfahren sowie eine Funkstation eines Funk-Kommunikationssystems anzugeben, die eine sichere Übertragung von Daten eines Verteildienstes ermöglichen. Diese Aufgabe wird durch die Merkmale der unabhängigen Patentansprüche erfüllt. Vorteilhafte Weiterbildungen der Erfindung sind den abhängigen Patentansprüchen entnehmbar.

Erfindungsgemäß wird ein Datenpaket bei einer ersten Übertragung über die Funkschnittstelle des Funk-Kommunikationssystems mit einem ersten Fehlerschutz versehen. Bei der nachfolgenden zumindest einen weiteren Übertragung wird das Datenpaket mit einem zweiten Fehlerschutz versehen, der gegenüber dem ersten Fehlerschutz eine erhöhte Redundanz aufweist, wobei ein jeweils korrekter Empfang des Datenpakets von den zweiten Funkstationen nicht bestätigt wird.

Vorteilhaft wird durch die bei der weiteren Übertragung erhöhte Redundanz eine erhöhte Wahrscheinlichkeit des korrekten Empfangs des Datenpakets am Ort der zweiten Funkstationen sichergestellt, wodurch ein Einsatz bei einer Punkt-zu-Mehrpunkt-Übertragung vorteilhaft erscheint. Weiterhin kann vorteilhaft der Energieverbrauch der beispielsweise als eine mobile Funkstation ausgestalteten zweiten Funkstation reduziert werden, da nach einem erfolgreichen Empfang der ersten Aussendung des Datentpakets nachfolgende Aussendungen nicht mehr empfangen und ausgewertet werden müssen.

Gemäß einer Weiterbildung der Erfindung erfolgt die Erhöhung der Redundanz gemäß einem ARQ-Verfahren mit inkrementeller Redundanz. In Verbindung mit der auf diesem Merkmal basierenden Weiterbildung, nach dem der Empfang des Datenpakets von den zweiten Funkstationen nicht bestätigt wird, wird beispielsweise das bekannte Typ 2 ARQ-Verfahren in optimaler Weise auf die Bedingungen der Datenübertragung in Verteildiensten angepasst. Die Realisierung entspricht dabei einem effizienten ARQ-Verfahren ohne Verwendung eines Rückkanals. Dabei werden nicht oder verfälscht empfangene Datenpakete nicht explizit mittels einer negativen Bestätigung angefordert, sondern es werden senderseitig negative Bestätigungen angenommen, ohne dass diese tatsächlich empfangen wurden. Durch das auf einer inkrementellen Redundanz basierende ARQ-Verfahren werden somit nicht das gleiche Datenpakete mehrmals übertragen, sondern unterschiedliche Datenpakete, wobei die enthaltene Information bereits aus dem ersten Datenpaket extrahiert werden kann. Werden mehrere Datenpakete für die Decodierung der Information bei vorhandenen Übertragungsfehlern verwendet, so wird die Wahrscheinlichkeit einer korrekten Decodierung vorteilhaft erhöht. Mit dem beispielhaften Typ 2 ARQ-Verfahren können vorteilhaft quasi beliebig kleine Kodierraten definiert und somit mehr Redundanz zu einem Datenpaket hinzugefügt werden, als dieses mit den bekannten FEC-Verfahren möglich wäre.

Gemäß einer weiteren Ausgestaltung der Erfindung werden der erste und/oder der zweite Fehlerschutz abhängig von Eigenschaften der Funkschnittstelle gewählt. Damit wird beispielsweise abhängig von den aktuellen Funkkanaleigenschaften mehr oder weniger Redundanz zu den Datenpaketen hinzugefügt, und werden gegebenenfalls mehr oder weniger weitere Datenpakete mit inkrementeller Redundanz übertragen. Bei guten übertragungseigenschaften wird beispielsweise die Anzahl weiterer Datenpakete verringert, wodurch vorteilhaft die Übertragungskapazität in dem Übertragungskanal erhöht wird. Auch kann abhängig von den Eigenschaften der Funkschnittstelle die jeweilige Differenz bzw. der Hub zwischen den Kodierraten eingestellt werden. Die Eigenschaften kann die erste Funkstation oder eine übergeordnete Instanz des Funk-Kommunikationssystems beispielsweise aus bekannten Signalisierungen der zweiten Funkstationen über die Funkkanaleigenschaften bestimmen, über eine spezielle Signalisierung von den zweiten Funkstationen anfordern oder aus empfangenen Signalen der zweiten Funkstationen ableiten.

Gemäß einer weiteren Weiterbildung der Erfindung erfolgt die weitere Aussendung des Datenpakets mit dem zweiten Fehlerschutz erst nach einem bestimmten Zeitintervall. Hierdurch werden im Vergleich zu dem beschriebenen Wiederhol-Modus (engl. Repitition Mode) die Datenpakete nicht unmittelbar aufeinanderfolgend, sondern zeitlich versetzt übertragen, so dass beispielsweise die Schwundeffekte des Funkkanals vorteilhaft ausgenutzt werden können. Würde beispielsweise bei Einsatz eines FEC-Verfahrens während einer Schwundperiode eine nochmalige Übertragung des Datenpakets unter Umständen keine korrekte Decodierung ermöglichen, so kann bei einem Einsatz einer inkrementellen Redundanz durch Übertragung eines weiteren, inkrementell codierten Datenpaketes zu einem Zeitpunkt, zu dem der Funkkanal günstigere Eigenschaften aufweist, eine erfolgreiche Dekodierung ermöglicht werden.

Das erfindungsgemäße Verfahren wird besonders vorteilhaft in auf einem TDD-Verfahren (Time Division Duplex) basierenden Funk-Kommunikationssystemen eingesetzt. TDD bedeutet, dass die Übertragung sowohl in Aufwärts- als auch in Abwärtsrichtung in einem gemeinsamen Übertragungsrahmen erfolgt. Beispiele für derartige Systeme sind das einleitend genannten Hiperlan/2- und IEEE 802.11-System.

Weitere Merkmale und Vorteile der Erfindung ergeben sich aus den Patentansprüchen und der nachfolgenden Beschreibung eines Ausführungsbeispiels anhand der Zeichnung.

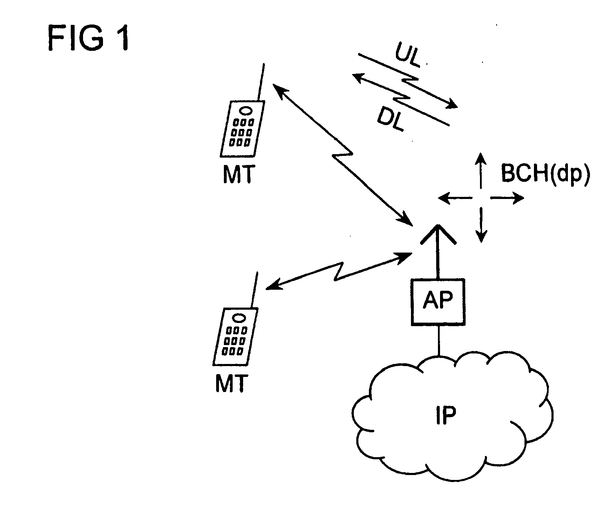

Dabei zeigt
- FIG 1: eine Struktur eines Funk-Kommunikationssystems, in dem das erfindungsgemäße Verfahren durchgeführt wird.

In der FIG 1 ist ein Ausschnitt eines Funk-Kommunikationssystems gezeigt, wie es beispielsweise in dem Hiperlan/2-System verwirklicht ist. Die Struktur der für das erfindungsgemäße Verfahren relevanten Komponenten ist in gleicher Weise auf andere Funk-Kommunikationssysteme übertragbar. Eine Basisstation AP (Access Point) ist über beispielsweise ein Internetprotokoll-basiertes Übertragungsnetzwerk IP mit weiteren Netzkomponenten verbunden und stellt einen so genannten Zugangspunkt zu diesem Netzwerk für in dem Funkversorgungsbereich der Basisstation AP befindliche Teilnehmerstationen MT (Mobile Terminal) dar. Die Übertragung über die Funkschnittstelle erfolgt dabei in Abwärtsrichtung DL (Downlink) von der Basisstation AP zu den Teilnehmerstationen MT sowie in Aufwärtsrichtung UL (Uplink) von den Teilnehmerstationen MT zu der Basisstation AP, und ist durch die varianten Eigenschaften der Funkschnittstelle aufgrund von Schwund, Abschattungen, Interferenzen etc. Störungen ausgesetzt.

Gemäß der FIG 1 sendet die Basisstation in einem Verteilkanal BCH (Broadcast Channel) Datenpakete dp (data packet) zu den empfangenden Teilnehmerstationen MT. Diese Datenpakete können dabei beispielsweise Signalisierungs- und/oder Nutzdaten von Diensten enthalten. Nach der Erfindung sendet die Basisstation AP die Datenpakete dp in dem Verteilkanal BCH jeweils mehrmals, wobei sie bei jeder weiteren Aussendung den Fehlerschutz des jeweiligen Datenpaketes dp durch eine Erhöhung der Redundanz verstärkt. Der korrekte Empfang der Datenpakete dp wird dabei von den empfangenden Teilnehmerstationen MT nicht bestätigt. Vielmehr wird die Anzahl der zusätzlich gesendeten Datenpakete dp sowie der Inkrement der Redundanz von der Basisstation AP an die aktuellen Eigenschaften des Übertragungskanals angepasst.

## Patentansprüche

1. Verfahren zur Datenübertragung in einem Funk-Kommunikationssystem, bei dem
von einer ersten Funkstation (AP) ein Datenpaket (dp) zu mehreren zweiten Funkstationen (MT) in einem Übertragungskanal (BCH) gesendet wird, wobei das Datenpaket (dp) für eine erste Übertragung über die Funkschnittstelle mit einem ersten Pehlerschutz versehen wird, und
von der ersten Funkstation (AP) das Datenpaket (dp) nachfolgend zumindest ein weiteres Mal zu den zweiten Funkstationen (MT) gesendet wird, wobei das Datenpaket (dp) für die weitere Übertragung über die Funkschnittstelle mit einem zweiten Fehlerschutz versehen wird, der gegenüber dem ersten Fehlerschutz eine erhöhte Redundanz aufweist, und wobei ein jeweils korrekter Empfang des Datenpakets (dp) von den zweiten Funkstationen (MT) nicht bestätigt wird.

2. Verfahren nach Anspruch 1, bei dem
die übertragenen Daten Nutz- und/oder Signalisierungsinformationen enthalten.

3. Verfahren nach Anspruch 1 oder 2, bei dem
die Erhöhung der Redundanz in dem zumindest einen nachfolgend gesendeten Datenpaket (dp) gemäß einem Automatic Repeat Request-Verfahren mit inkrementeller Redundanz erfolgt.

4. Verfahren nach einem vorhergehenden Anspruch, bei dem
der erste und/oder der zweite Fehlerschutz abhängig von Eigenschaften der Punkschnittstelle gewählt werden.

5. verfahren nach einem vorhergehenden Anspruch, bei dem
die Anzahl weiterer Datenpakete (dp) abhängig von Eigenschaften der Funkschnittatelle gewählt wird.

6. Verfahren nach einem vorhergehenden Anspruch, bei dem
von der ersten Funkstation (AP) die weitere Aussendung des Datenpakets (dp) mit dem zweiten Fehlerschutz nach einem bestimmten Zeitintervall durchgeführt wird.

7. Funkstation eines Funk-Kommunikationasyatems, aufweisend, Mittel zum Versehen eines Datenpakets (dp) für eine erste Übertragung über eine Funkschnittstelle mit einem ersten Fehlerschutz, und zum Versehen des Datenpakets (dp) mit einem zweiten Fehlerschutz für zumindest eine weitere Übertragung über die Funkschnittstelle, wobei der Fehlerschutz für die zumindest eine weitere Übertragung des Datenpakets (dp) gegenüber dem ersten Fehlerschutz eine erhöhte Redundanz aufweist, und wobei ein jeweils korrekter Empfang des Datenpakets (dp) von den zweiten Funkstationen (MT) nicht bestätigt wird, und
Mittel zum Senden des Datenpakets (dp) in einem Übertragungskanal (BCH) über die Funkschnittstelle zu mehreren weiteren Funkstationen (MT).

8. Funkstation nach Anspruch 7, die als eine Basisstation (AP) den Funk-Kommunikationssystema ausgestaltet ist.

## Claims

1. A method for data transmission in a radio communication system, wherein
a data packet (dp) is sent by a first radio station (AP) to a plurality of second radio stations (MT) in a transmission channel (BCH), the data packet (dp) for a first transmission over the radio interface being provided with a first error protection means, and
the data packet (dp) is subsequently sent by the first radio station (AP) at least one further time to the second radio stations (MT), the data packet (dp) for the further transmission over the radio interface being provided with a second error protection means which has an increased redundancy compared with the first error protection means and each correct reception of the data packet (dp) not being acknowledged by the second radio stations (MT.

2. The method according to claim 1, wherein
the transmitted data contains user and/or signalling information.

3. The method according to claim 1 or 2, wherein
the increase in redundancy is effected in the at least one subsequently sent data packet (dp) according to an ARQ method with incremental redundancy.

4. The method according to a preceding claim, wherein
the first and/or second error protection means is chosen as a function of characteristics of the radio interface.

5. The method according to a preceding claim, wherein
the number of further data packets (dp) is chosen as a function of characteristics of the radio interface.

6. The method according to a preceding claim, wherein
the further transmission of the data packet (dp) with the second error protection means is performed by the first radio station (AP) after a specific time interval has elapsed.

7. A radio station of a radio communication system, comprising means for providing a data packet (dp) for a first transmission over a radio interface with a first error protection means, and for providing the data packet (dp) with a second error protection means for at least one further transmission over the radio interface, with the error protection means for the at least one further transmission of the data packet (dp) comprising an increased redundancy compared with the first error protection means, and with each correct reception of the data packet (dp) not being acknowledged by the second radio stations (MT), and
means for transmitting the data packet (dp) in a transmission channel (BCH) over the radio interface to several further radio stations (MT).

8. The radio station according to claim 7, which is embodied as a base station (AP) of the radio communication system.

## Revendications

1. Procédé pour transmettre des données dans un système de radiocommunication, dans lequel
un paquet de données (dp) est envoyé d'une première station radio (AP) vers plusieurs deuxièmes stations radio (MT) sur un canal de transmission (BCH), le paquet de données (dp) étant doté, pour une première transmission via l'interface radio, d'une première protection contre les erreurs, et
le paquet de données (dp) est envoyé ensuite au moins une autre fois de la première station radio (AP) vers les deuxièmes stations radio (MT), le paquet de données (dp) étant doté, pour la transmission suivante via l'interface radio, d'une deuxième protection contre les erreurs, laquelle présente une redondance augmentée par rapport à la première protection contre les erreurs, et une réception correcte du paquet de données (dp) n'étant pas confirmée par les deuxièmes stations radio (MT).

2. Procédé selon la revendication 1, dans lequel
les données transmises contiennent des informations utiles et/ou de signalisation.

3. Procédé selon la revendication 1 ou 2, dans lequel
l'augmentation de la redondance dans ledit au moins un paquet de données (dp) est réalisée selon un procédé Automatic Repeat Request à redondance incrémentielle.

4. Procédé selon une revendication précédente, dans lequel
on choisit la première et/ou la deuxième protection contre les erreurs selon des propriétés de l'interface radio.

5. Procédé selon une revendication précédente, dans lequel
on choisit le nombre de paquets de données (dp) suivants selon des propriétés de l'interface radio.

6. Procédé selon une revendication précédente, dans lequel
la première station radio (AP) effectue l'envoi suivant du paquet de données (dp), doté de la deuxième protection contre les erreurs, après un intervalle de temps déterminé.

7. Station radio d'un système de radiocommunication, comprenant
des moyens pour doter un paquet de données (dp), pour une première transmission via une interface radio, d'une première protection contre les erreurs et pour doter ledit paquet de données (dp) d'une deuxième protection contre les erreurs pour au moins une transmission suivante via l'interface radio, la protection contre les erreurs pour ladite au moins une transmission suivante du paquet de données (dp) présentant une redondance augmentée par rapport à la première protection contre les erreurs et une réception correcte du paquet de données (dp) n'étant pas confirmée par les deuxièmes stations radio (MT), et
des moyens pour envoyer le paquet de données (dp) sur un canal de transmission (BCH) via l'interface radio vers plusieurs autres stations radio (MT).

8. Station radio selon la revendication 7, configurée comme une station de base (AP) du système de radiocommunication.
